# EUROPEAN PATENT SPECIFICATION

(11) **EP 2 308 596 B1**
(45) Date of publication and mention of the grant of the patent: **21.09.2016**
(21) Application number: 09172402.1
(22) Date of filing: 07.10.2009
(51) Int. Cl.: B01J 29/072, B01J 29/46, B01D 53/94

(54) **Cu/zeolite SCR catalyst for NOx reduction in exhaust gases and manufacture method thereof**
Cu/Zeolith SCR Katalysator zur NOx Reduzierung in Abgasen und Verfahren zu deren Herstellung
Catalyseur à base de zéolithe au cuivre utilisé dans le procédé SCR pour la réduction de NOx et sa methode de préparation

(43) Date of publication of application: 13.04.2011
(73) Proprietor: Ford Global Technologies, LLC, Dearborn, MI 48126 (US)
(72) Inventor: Ukropec, Robert, 52072 Aachen (DE); Chigapov, Albert, 52072 Aachen (DE); Dubkov, Alexei, 52072 Aachen (DE); Balenovic, Mario, 5645 KT Eindhoven (NL); Reichert, Martina, 50679 Köln (DE); Carberry, Brendan, 52074 Aachen (DE)
(74) Representative: Illing, Rolf

(56) References cited:
- WO-A2-2007/070639
- US-A- 5 059 569
- PARK ET AL: "Hydrothermal stability of CuZSM5 catalyst in reducing NO by NH3 for the urea selective catalytic reduction process" JOURNAL OF CATALYSIS, ACADEMIC PRESS, DULUTH, MN, US, vol. 240, no. 1, 15 May 2006 (2006-05-15), pages 47-57, XP005392835 ISSN: 0021-9517
- KUCHEROV A V ET AL: "Stability of the Square-Planar Cu<2+> Sites in ZSM-5: Effect of Preparation, Heat Treatment, and Modification" JOURNAL OF CATALYSIS, ACADEMIC PRESS, DULUTH, MN, US, vol. 186, no. 2, 10 September 1999 (1999-09-10), pages 334-344, XP004443073 ISSN: 0021-9517
- LIN ET AL: "A novel method for enhancing on-stream stability of fluid catalytic cracking (FCC) gasoline hydro-upgrading catalyst: Post-treatment of HZSM-5 zeolite by combined steaming and citric acid leaching" CATALYSIS TODAY, ELSEVIER, vol. 125, no. 3-4, 19 July 2007 (2007-07-19), pages 185-191, XP022157759 ISSN: 0920-5861
- Moon Hyeon Kim ET AL: "The characteristics of a copper-exchanged natural zeolite for NO reduction by NH3 and C3H6", Catalysis today, vol. 44, no. 1-4, 1 September 1998 (1998-09-01), pages 57-65, XP055230343, ISSN: 0920-5861, DOI: 10.1016/S0920-5861(98)00173-4

## Description

The present invention basically relates to the abatement of nitrogen oxides (NOₓ) and particularly to Selective Catalytic Reduction (SCR) of NOₓ from exhaust gas streams using ammonia as a reductant. The invention is further related to obtain a SCR catalyst with improved catalyst activity within wide temperature range, and to a method of the catalyst preparation for NOₓ removal or reduction, combined with reduced emissions of non-reacted ammonia (so called ammonia slip), and reduced side products such as nitrous oxide (N₂O).

The invention relates in particular to a process for reducing NOₓ from oxygen containing exhaust gases from internal combustion engines (ICE), especially diesel engines, and could be also related to removing process of NOₓ formed by any other combustion processes, such as in stationary engines, in industry etc via selective catalytic reduction (SCR) of NOₓ with ammonia (NH₃) used as a reducing agent.

Nitrogen oxides (NOₓ) are generally recognized as major air pollutants contributing to the formation of acid rain, urban smoke (particularly responsible for ozone formation in the low levels of atmosphere close to urban areas), and global warming via greenhouse effect caused by N₂O. Their presence in the atmosphere is causing devastating impact on forests and health of people and the living species. It has an enhanced eroding effects on buildings as well.

The major sources of the NOₓ (NO, NO₂) are combustion processes, as an example the internal combustion engine, coal, oil, and gas burners, boilers and incinerators, where NOₓ forms in the high temperature zones.

It is important to remove NOₓ gases directly from the source of the emissions production. However, the selection of the process of NOₓ reduction and its efficiency depends on the source, gas temperature, and the presence of other compounds in the exhaust stream, and their concentration, such as oxygen, water, SO₂, SO₃, H₂S, unburned hydrocarbons (HC), CO, and CO₂. Generally, lean (oxygen rich) combustion is producing more NOₓ, than the fuel-rich combustion and exhaust gases contain from 2 up to 16% of oxygen. Therefore it is important to have a catalyst which is able to sufficiently reduce nitrogen oxides effectively at low and high levels of oxygen. In the case of using ammonia as a reduction agent, it is also important for a catalyst not to oxidize ammonia prior to NOₓ reduction, and to have the ability to provide high NOₓ conversion efficiency with zero or ultra low ammonia slip. Ammonia is a toxic substance, which is under strong emission legislation standards.

Recent environmental EU or North America standards will soon require cleaner vehicles having engines with low emissions of NOₓ (Euro 5 - 2.0 g/kWh (HD), and Euro 6 - 0.4 g/kWh (HD) ; US EPA standards MY2007 and later 0.27 g/kWh (0.2 g/bhp h), which could not be achieved without advanced aftertreatment systems with NOₓ reduction catalysts. This will require catalysts to be able to achieve very high reduction of NOₓ at low operating temperatures (150 - 300°C). Nevertheless, from vast variety of vehicles used and driving conditions, the temperature range of exhaust gases is also becoming wider. Therefore, it would be better to have a catalyst or catalytic system allowing high NOₓ reductions at low and high temperatures (at least up to 600°C). In addition, it is necessary to keep the high performance during the life time of the vehicle, so the high-temperature durability of a catalyst is important, especially when SCR catalyst is installed after a diesel particulate filter (DPF), which might create high temperatures during the soot regeneration.

Some catalysts were reported showing very good performance at specific NO: NO₂ ratio (typically 1:1 was reported as the most appropriate), as described in EP1 054 722 B1. However, it is very difficult to obtain NOₓ gases with such regulated ratio, and it is even more difficult to keep such ratio during a life time of the vehicle, due to aging of the oxidation catalyst and CDPF, and deterioration of its performance for NO₂ production. It is therefore desirable to have the SCR catalyst with very high NOₓ conversion efficiency with low NO₂ level, typical for exhaust gases. The catalyst able to achieve high NOₓ conversion efficiency for NO only containing exhaust gases, is being more favorable for practical applications.

Another important property of the SCR catalyst is to be sulfur tolerant, and to produce a minimal amount of N₂O, not exceeding a few ppm. N₂O is a greenhouse gas, and although N₂O emissions are not yet under the legislation, its greenhouse gas effect (GWP) is 310 times higher compared to CO₂, which is a major manmade contributor to the global warming.

The next important feature for SCR catalyst is its ability to provide high NOₓ reduction within wide range of exhaust gas flow rates, e.g. under high gas space velocity per hour (GHSV). Generally, it is a great challenge to obtain the very active catalyst, which is able to perform high NOₓ conversion efficiencies at a wide temperature range and a wide GHSV range and independently from the concentration level of NO₂ in the exhaust gas. It is also important that such catalyst should selectively convert NOₓ to nitrogen, without or with very low formation of side products, such as N₂O and without or with very low level of ammonia slip.

Regarding elimination of ammonia slip, there are inventions proposing to use the ammonia oxidation catalyst as an addition to the SCR catalyst, where ammonia not converted by the SCR reaction is consecutively oxidized, according to EP1 633 959 B1. However, such catalysts are containing costly noble metals like Pt, operating selectively only at a narrow temperature range and require additional space, which is very limited for automotive applications as a rule.

The best SCR catalysts developed at the moment include as a basic component copper (Cu) or iron (Fe) - ion-exchanged zeolites.

EP 0 393 905 B1 and US 5 024 981 describe SCR catalysts including transition metals-substituted zeolite catalysts, using various zeolites substituted with metals like Cu or Fe.

Copper-containing zeolites are more active at low temperatures, less vulnerable to NO/NO₂ ratio and are quite active even with low NO₂ level. On the other hand, they have the following disadvantages: low conversion at high-temperature conditions above 400°C due to the high rate of ammonia oxidation and higher level of N₂O production. In contrary, iron-containing systems are good at high-temperature conditions and revealed quite limited level of N₂O emissions. However, they are not effective at low temperatures below 300°C and at low level of NO₂ in NOₓ, which is usual for engines with internal combustion. Another disadvantage of iron-containing zeolites is ammonia slip.

The use of zeolite-based catalysts for the SCR of nitrogen oxides with ammonia is well established. US 4 220 632 A discloses the catalytic reduction of NOₓ in an exhaust gas stream using ammonia as a reductant in the presence of a zeolite catalyst in the hydrogen or sodium form, having pore openings of about 3 to 10 Angstroms.

US 4 778 665 A describes an SCR process for pre-treating industrial exhaust gases contaminated with NOₓ in which the catalyst includes an intermediate pore zeolite (ZSM-5) with a silica to alumina ratio of at least 50. The zeolite is preferably in the hydrogen form, or has up to about 1 percent of a platinum group metal (PGM). The hydrogen forms of zeolite ZSM-5 catalyses the SCR reaction at temperatures between about 400°C to about 500°C. These catalysts were tested as compacted powder extrudates at GHSV below 10000 h⁻¹.

US 5 520 895 A describes a process employing iron impregnated zeolites as catalysts for the SCR of NOx in the exhaust gas. These catalysts are capable to obtain more than 80 percent conversion of the NOₓ and have been tested as powders at GHSV of 12000 h⁻¹.

Because some of the documents discussed above are using examples of the SCR experiments performed with powdered samples under relatively low space velocities, it is more likely, that mentioned catalysts will perform differently, when supported on the monolith, and operate at higher space velocities.

It was mentioned in US Patent application US 2005/026372, that the space velocity of the experiment performed on monolith catalyst is app. 4 times lower compared to the space velocity of the powdered sample experiment, in order to obtain the results at relatively comparative conditions. So the described low space velocities for monolith catalysts are very far away from the real conditions, which are usually in the range of 20000 - 120000 h⁻¹ and more for automotive applications. Therefore claimed results are usually unrealistic, showing very high NOₓ conversion efficiencies at very low space velocities for powdered samples, which will be difficult to obtain under real conditions.

Recent patent application from CSI, WO 2008085280 describes the catalysts containing zeolite and different metal ions, basically cerium, which are displaying good high-temperature performance, but such catalysts are not active below 300 °C.

J.-. Park et al: "Hydrothermal stability of CuZSM5 catalyst in reducing NO by NH3 for the urea selective catalytic reduction process", Journal of Catalysis, Academic Press, Duluth, MN, US, vol. 240, no. 1, 15 May 2006, pages 47-57, discloses inter alia a Cu-ZSM-5 zeolite that has been prepared by ion-exchanging a starting NH4-ZSM-5 with a copper acetate solution at room temperature for 5 hours followed by drying and calcination at 500°C in air for 5 hours.

A.V. Kucherov et al.: " Stability of the Square-Planar Cu2+ Sites in ZSM-5: Effect of Preparation, Heat Treatment, and Modification", Journal of Catalysis, Academic Press, Duluth, MN, US, vol. 186, no. 2, 10 September 1999, pages 334-344, discloses inter alia a method to prepare a Cu-ZSM-5 from a NH4-ZSM-5 by a calcination at 550°C followed by removal of extra-lattice aluminum species generated during calcination by acid leaching using HNO3 acqueous solution followed by calcination at 600° and renewed treatment with HNO3 followed by calcination and subsequent insertion of copper by ion-exchange using a solution of copper nitrate.

X. Lin et al.: "A novel method for enhancing on-stream stability of fluid catalytic cracking (FCC) gasoline hydro-upgrading catalyst: Post-treatment of HZSM-5 zeolite by combined steaming and citric acid leaching", Catalysis Today, Elsevier, vol. 125, no. 3-4, 19 July 2007, pages 185-191, discloses inter alia a method consisting of steaming and subsequent citric acid leaching to finely tune acidity and pore structure of HZSM-5 zeolite.

Further prior art is given by M. H. Kim et al.: "The characteristics of a copper-exchanged natural zeolite for NO reduction by NH3 and C3H6", Catalysis Today, Elsevier, vol. 44, 1998, pages 57-65, US 5,059,569 and WO 2007/070639 A2. Summarizing the prior art, there is still a pressing need for SCR catalyst with ammonia, which is able to effectively operate under wide range of operating conditions. Cu/zeolite catalysts are active at low temperatures, but have low performance at high temperatures and produce high N₂O emissions, while Fe/zeolite SCR catalysts are not active at low temperatures and have high ammonia slip. The stability of such catalysts under severe conditions of Diesel exhaust also should be greatly improved, especially for applications with SCR catalyst on the Diesel particulate filter (DPF) and downstream of this filter due to the extremely high temperatures during DPF regeneration from collected soot. US 5 254 322 is one of the numerous examples to deal with the problem of hydrothermal stability of the SCR catalysts based on zeolites.

The present invention is dealing with these mentioned disadvantages and it is focused on improvement of SCR catalyst performance to be active in NOx reduction within wide temperature range using NO-only reaction mixtures under any Diesel exhaust operating conditions and under high space velocities, with decreased NH₃ slip and N₂O emissions and increased thermal stability up to 900°C under hydrothermal conditions, which are typical for automotive exhaust conditions.

According to our findings, presented in this invention, the performance of Cu/zeolite commercial catalysts (containing ZSM5) can be greatly improved at high temperatures to provide NOx conversion near and above 80% at 200-600°C, and more than 90% NOₓ conversion from 250°C up to 600°C. This new catalyst has also very high resistance to thermal deactivation in comparison with commercial Cu/zeolite catalyst even after hydrothermal treatment at 900°C.

To modify and improve the performance of Cu/zeolite commercial SCR catalyst, the new method was developed according to the features of the independent claim 1. This method comprises first a removal, in a starting material of honeycomb structure that is Cu-ZSM-5 zeolite washcoated on a monolithic substrate, of copper and of aluminum extra-lattice species from the zeolite. This first step is performed by double treatment with a citrate-containing solution, whereby the first treatment is followed by intermediate calcination at a temperature of at least 500°C and wherein the second treatment with the citrate-containing solution is carried out after said calcination.

The intermediated calcination is necessary to dealuminate zeolite with formation of extra-framework aluminum species in zeolite channels and to re-distribute remaining copper ions to facilitate their removal. The following second treatment with citric acid - diammonium citrate salt is designed to finally remove the formed extra-framework aluminum and remaining copper species.

The second step includes re-insertion of copper or insertion of Cu-M ions, where M can be selected from the group consisting of Mg, Ca, Sr, La, Pr, B, Zr or Mg-Fe or Mg-Ce, by ion-exchange and/or impregnation of the washcoated zeolite from which copper and aluminum extra-lattice species have been removed. The second step is preferably including the ion-exchange of modified zeolite with a solution of copper nitrate or with a mixture of copper nitrate and magnesium nitrate. These mixed Cu-M/zeolite - as an example Cu-Mg/zeolite - catalysts can be also produced during the second step by ion-exchange with copper nitrate with the following impregnation with magnesium nitrate in the presence of urea. The following promoters, such as Ca, Sr, La, Pr, B, Zr, can be used instead of magnesium. Magnesia can be partially substituted by Fe or Ce. These promoters are in place to protect zeolite from new dealumination with formation of new extra-framework aluminum species.

The catalysts described in this invention are monolith type commercial materials of honeycomb structure consisting from a substrate washcoated with zeolite-containing catalyst material. The substrate can be made from refractory materials such as a ceramic, e.g. cordierite, but could also be made from metals, or could be made from the materials containing catalytic material, namely zeolite via extruding it as a monolith.

The catalytic washcoat is based on zeolites or could be based on any other silica-alumina microporous materials, such as for example silica-alumina phosphates (SAPO).

Such modified Cu-M/zeolite can be also used for applications with Diesel particulate filter, including Cu-M/zeolite SCR catalyst deposited on the filter and for applications with SCR catalyst downstream (behind) of the DPF due to their extremely high thermal stability.

The modified Cu/zeolite or Cu/M catalyst prepared according to this invention, has high NOₓ reduction properties at temperatures of 170-600°C and increased hydrothermal stability up to 900°C.

The present invention can be illustrated by the following examples:

### Test conditions

All catalysts were tested in a laboratory-scale fixed-bed flow reactor made from a quartz tube. An electric furnace was used for the heating of the reactor.

A core catalyst sample of ¾" D x 1 "L was inserted into quartz tube wrapped with a matting material. The cores were equipped with two thermocouples inserted directly before and behind core sample. A conventional flow setup was used for gas mixture preparation. All gases were of ultra high purity. Humidifier was installed to provide precise water concentration in the gas line. The flow rates were controlled using mass flow controllers (MKS, Munich, Germany). To prevent water condensation, all connection lines were heated up to app. 170°C. Reactor effluents were analyzed with Twin Chemical Ionization MS from MS4, Austria.

The concentration of NOₓ in the gas mixture for experiments was 500 ppm, NH₃ 600 ppm, O₂ 10 vol. %, and H₂O 10%, and helium as balance. Typically 500 ppm of NO represented NOₓ for experiments. Total feed flows were set to obtain SV 30000; 60000 or 90000 h⁻¹.

### Catalyst preparation and reference samples

### General description

The preparation process for the individual samples was as follows: Commercially available samples containing copper (commercial **Cu-zeolite, Reference 1**) and iron (commercial **Fe-zeolite, Reference 2**) ZSM-5 zeolite were used as the reference samples and for preparation of modified samples, presenting this invention. All reference samples were zeolite-washcoated cordierite with small amount of alumina as a binder. For cores preparation, the cores were drilled from washcoated monolithic substrate having a cell density of 400 cpsi (= 'cells per square inch') with a ca. 30% by weight zeolites-alumina washcoat loading. The cores size was selected as 3/4 inch in diameter and 1 inch in length for core samples.

All samples including reference samples were preliminary hydrothermally treated before testing with 10 vol. % H₂O, 10 vol. %O₂ in helium at 600°C for 1 hour, the same mixtures of water and oxygen in helium were used for hydrothermal treatment at 900°C for 1 hour.

### Example 1, Invention - Cu/ citrate treated zeolite

15 core samples were drilled and cut from monolithic substrate brick of commercial Cu/zeolite, Reference 1. The samples were further treated with a solution of 0.15 M of citric acid and 0.4 M of diammonium hydrogen citrate for 2 hours at 97°C and thoroughly washed with distilled water.

After drying at 100°C the cores were then calcined at 600°C for 2h.

The cores were treated further the second time under the same conditions with the same solution containing citric acid and its diammonium hydrogen salt, washed with distilled water using a big excess of water and were then dried at 100°C and calcined at 400°C.

These core samples were further ion-exchanged using 0.1 M solution of copper nitrate at 97°C for 2h and dried at 100°C.

Finally, the cores were calcined at 600°C for 1 h.

### Examples 2, Invention - Cu-Mg/ citrate treated zeolite

The core samples were prepared and treated as in example 1, but were ion-exchanged with the solution containing mixture of copper and magnesium nitrates instead of only copper nitrate as in example 1.
Example 2a (Cu/Mg 15/1) was prepared using a solution of 0.1 M copper nitrate and 0.0066 M magnesium nitrate at 97°C
Example 2b (Cu/Mg 7.5/1) was prepared using 0.1 M copper nitrate and 0.0133 M magnesium nitrate solution
Example 2c (Cu/Mg 5/1) was ion-exchanged with the solution of 0.1 M copper nitrate and 0.02 M magnesium nitrate

### Examples 3, Invention Cu-M/citrate treated zeolite

The cores were prepared according to Example 1, including the ion-exchange with copper nitrate under the same conditions. The samples were further dried at 100°C and calcined at 400°C with the following impregnation, using solution of metal salt (salts) in the presence of urea. The samples were dried at 88°C in closed containers overnight and were finally calcined at 600°C for 1 h.

Example 3a (Cu-Mg) was impregnated with the solution of 25 mg of magnesium nitrate, 0.6 g of urea and 1.8 g of distilled water per core.

Example 3b (Cu-B) was impregnated with the solution of 20 mg of ammonium pentaborate, 0.6 g of urea and 1.8 g of distilled water per core.

Example 3c (Cu-La) was impregnated with a solution containing 42 mg of lanthanum nitrate, 0.6 g of urea and 1.8 g of distilled water per core.

Example 3d (Cu-Ca) was impregnated with a solution containing 11 mg of calcium nitrate, 0.6 g of urea and 1.8 g of distilled water per core.

Example 3e (Cu-Sr) was impregnated with a solution containing 12 mg of strontium nitrate, 0.6 g of urea and 1.8 g of distilled water per core.

Example 3f (Cu-Pr) was impregnated with a solution containing 21.7 mg of praseodymium nitrate, 0.6 g of urea and 1.8 g of distilled water per core.

Example 3g (Cu-Zr) was impregnated with a solution containing 62 mg of zirconyl nitrate (35 weight% in diluted nitric acid), 0.6 g of urea and 1.8 g of distilled water per core.

Example 3h (Cu-Mg-Fe) was impregnated with a solution containing 5 mg of magnesium nitrate; 5 mg of iron (III) nitrate and 0.6 g of urea and 1.8 g of distilled water per core.

Example 3i (Cu-Mg-Ce) was impregnated with a solution containing 5 mg of magnesium nitrate; 17 mg of cerium (III) nitrate and 0.6 g of urea and 1.8 g of distilled water per core.

### BRIEF DESCRIPTION OF THE DRAWINGS

In the following detailed description, reference will be made to the attached drawings in which:

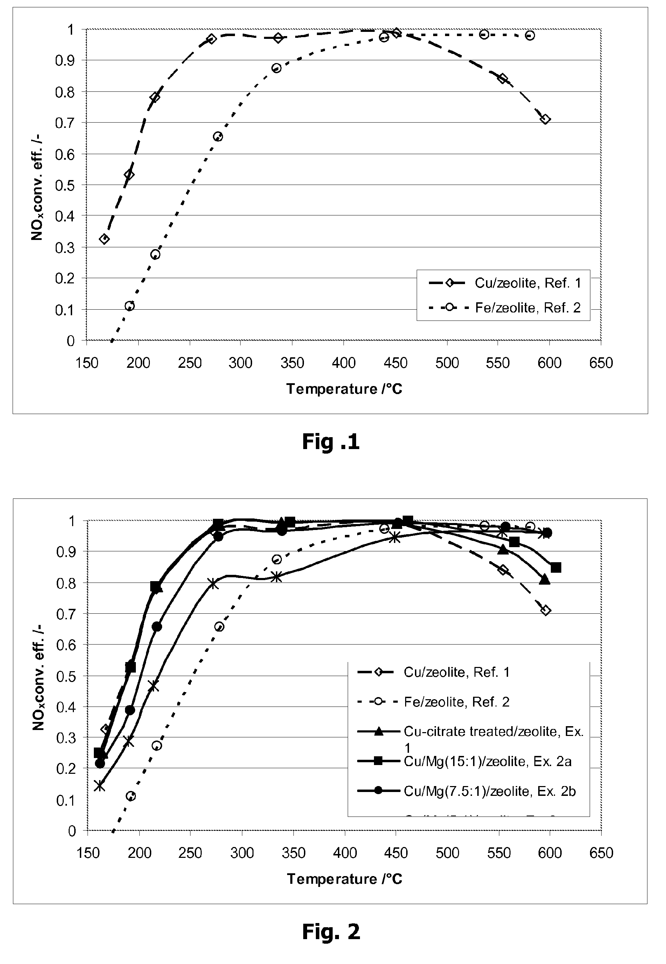

- Fig.1.: shows the catalytic activity of the commercial Cu/zeolite SCR catalyst, Reference 1, and Fe/zeolite SCR catalyst, Reference 2 in the temperature range of 160 - 600°C, SV = 30 000 h⁻¹; Reaction mixture NO - 500 ppm, NH₃ - 600 ppm, O₂ -10 vol. %, H₂O - 10%, and balance helium;
- Fig.2.: shows a comparison of catalytic performance of a commercial Cu/zeolite SCR catalyst, Reference 1, a Fe/zeolite SCR catalyst; Reference 2, and catalysts of the invention, Cu/ treated zeolite (Example 1) and Cu-Mg/ treated zeolites (Examples 2a-2c) with different Cu/Mg molar ratio in solution during ion-exchange and reaction temperature range 160 - 600°C, SV = 30 000 h⁻¹; reaction mixture NO - 500 ppm, NH₃ - 600 ppm, O₂ -10 vol. %, H₂O - 10% and balance helium;

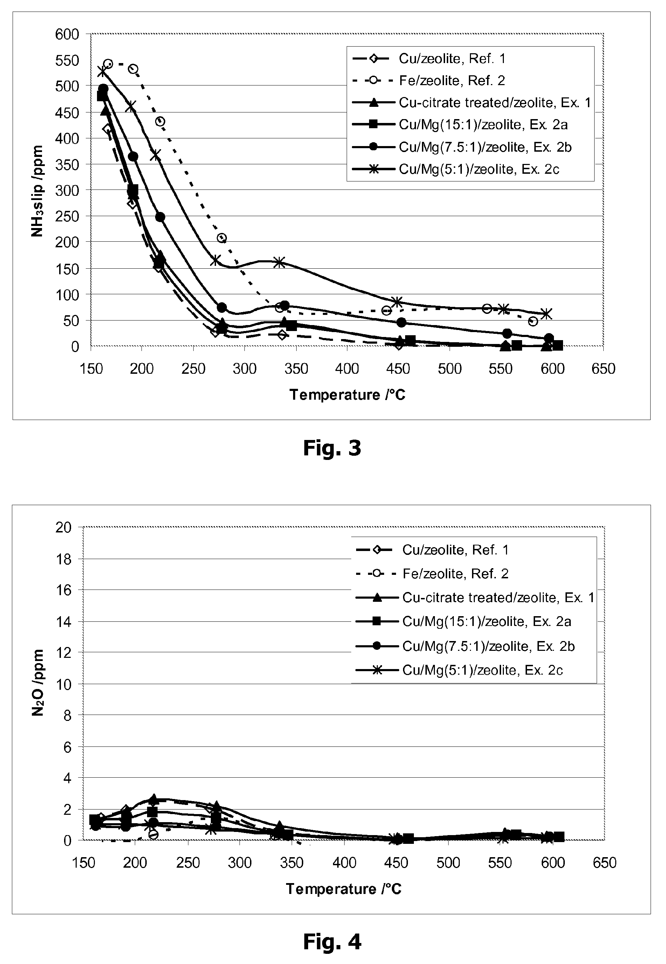

- Fig.3.: shows a comparison of ammonia slip over the commercial Cu/zeolite SCR catalyst (Reference 1) and Fe/zeolite SCR catalyst (Reference 2) and catalysts of invention, Cu/ treated zeolite Example 1, and Cu-Mg/ treated zeolites, Examples 2a-2c with different Cu/Mg molar ratio in solution during ion-exchange; Reaction temperature range 160 - 600°C, SV = 30 000 h⁻¹; Reaction mixture NO - 500 ppm, NH₃ - 600 ppm, O₂ -10 vol. %, H₂O 10%, and balance helium;
- Fig.4.: shows a comparison of N₂O emissions over the commercial Cu/zeolite SCR catalyst (Reference 1), a Fe/zeolite SCR catalyst (Reference 2) and catalysts according to the invention, Cu/ treated zeolite Example 1, and Cu-Mg/ treated zeolites, Examples 2a-2c with different Cu/Mg molar ratio in solution during ion-exchange at a reaction temperature range of 160 - 600°C, SV = 30 000 h⁻¹ and reaction mixture NO - 500 ppm, NH₃ - 600 ppm, O₂ -10 vol. %, H₂O - 10% and balance helium;

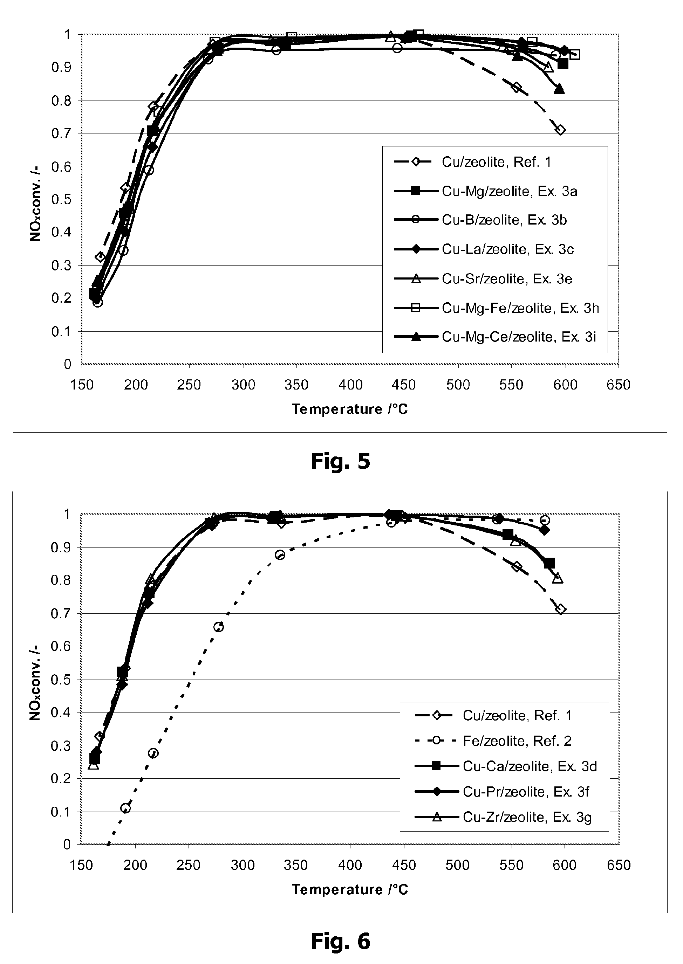

- Fig.5.: shows a comparison of catalytic performance of the commercial Cu/zeolite SCR catalyst (Reference 1) and catalysts according to the invention, Examples 3, 3a- Cu-Mg, 3b-Cu-B, 3c-Cu-La, 3e- Cu-Sr, 3h-Cu-Mg-Fe, 3i- Cu-Mg-Ce; with reaction temperature range of 160 - 600°C, SV = 30 000 h⁻¹, Reaction mixture NO - 500 ppm, NH₃ - 600 ppm, O₂ -10 vol. %, H₂O 10% and balance helium;
- Fig.6.: shows a comparison of catalytic performance of a commercial Cu/zeolite SCR catalyst (Reference 1) and a Fe/zeolite SCR catalyst; (Reference 2) and catalysts of invention, Examples 3, 3d- Cu-Ca, 3f-Cu-Pr, 3g- Cu-Zr, with reaction temperature range 160 - 600°C, SV = 30 000 h⁻¹ and Reaction mixture NO - 500 ppm, NH₃ - 600 ppm, O₂ - 10 vol. %, H₂O 10% and balance helium; and

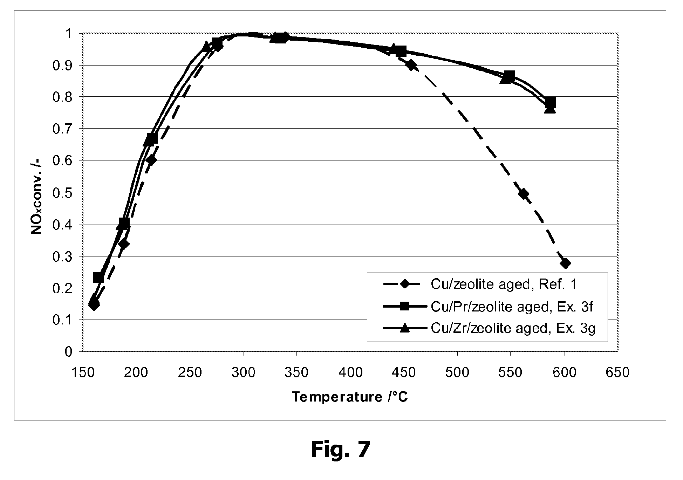

- Fig.7: shows the catalytic performance of commercial Cu/zeolite SCR catalyst (Reference 1) and catalysts of invention, Example 3f-Cu-Pr and Example 3g Cu-Zr after hydrothermal treatment in 10 vol.% O₂ and 10 vol.% water in helium at 900°C for 1 hour.

### DETAILED DESCRIPTION OF INVENTION

It is known, that current commercially available SCR catalysts for NOₓ reaction with ammonia, which are based either on Cu/zeolite or Fe/zeolite (where zeolite is ZSM5), have different activity, and could effectively convert NOₓ to the nitrogen only within a limited temperature range. Their general performance is shown on Fig.1 using only NO (nitrogen oxide) as NOₓ source and NH₃/NO ratio α=1.2, using a small excess of ammonia. The data obtained are representing the typical features of copper (Cu/ zeolite, Reference 1) and iron (Fe/zeolite, Reference 2), the current commercial technologies. The performance of Cu-SCR is good at low temperature range starting at 175 - 200°C, as can be seen on Fig. 1, allowing to obtain near 70% NOx conversion at 200 °C, even using only NO without NO₂ added. The Cu-SCR catalyst has an excellent NOₓ conversion level within medium temperature range at 200-400°C, which is close to 100% NOₓ reduction, but NOₓ conversion decreased at temperatures above 450°C. The performance of commercial Fe/zeolite catalyst is presented on Fig. 1, too. Iron-containing systems are good under high-temperature conditions in contrast to Cu-containing systems, and revealed a quite limited low level of N₂O emissions, as can be seen on Fig. 4, but Fe-SCR catalyst is not effective at low temperatures, and at low levels of NO₂. They are not active with NO-based exhaust gas; while the amount of NO₂ is typically small, only near 3% regarding NO for the diesel engine's exhaust. So the NOₓ composition representing NO-only, like it has been shown on Fig.1, is close to real situation. In general, the activity of Fe-SCR catalyst is better in NOₓ reduction, when using the mixture of NO₂ + NO instead of pure NO, but the activity at low temperatures is still lower relative to Cu/zeolite SCR catalyst.

Both Cu- only and Fe-only SCR catalysts have real disadvantages, which do not allow them to provide effective NOₓ reduction for wide temperature range. In addition, Cu-SCR has higher N₂O selectivity, while Fe-containing SCR has ammonia slip, which is not acceptable. The catalytic activity of these samples also depends on the level of NO₂ in the NOₓ, which is requiring the specific NO oxidation catalysts upstream of the SCR catalyst. Another disadvantages for these catalysts are, that they are not completely able to utilize ammonia for the reduction of NOₓ in SCR reaction, and this ammonia passes to the atmosphere, which creates high environmental risk, and high NOₓ conversion efficiency on some catalysts at high temperatures could be only achieved with enormous increase of NH₃ dosing, due to partial NH₃ oxidation, which is not economical, and leads to NH₃ slip as well.

In present invention, we deal with these disadvantages, and show the way for improvement of the commercial Cu/zeolite SCR catalyst by its modification.

In our previous early publication on Cu/zeolite stability, published in 1999 [A. Kucherov, A. Chigapov, A. Ivanov, and M. Shelef., Ford Motor Co. "Stability of the Square-Planar Cu+2 in ZSM-5: Effect of Preparation, Heat Treatment, and Modification", Journal of Catalysis, 186, 334-344 (1999)] we showed, that the basic reason of irreversible deactivation of the most active Cu sites in zeolite ZSM-5 is reaction of these sites with extra-lattice (extra-framework) aluminum species formed during high-temperature dealumination of zeolite.

It is known, that Cu/zeolite catalyst could be used for SCR reaction with hydrocarbons (Reaction 1), and currently the same type of catalyst has been developed as a commercial catalyst for SCR reaction with ammonium (Reaction 2):

NOx + HC → N₂ (Reaction 1)

NOx + NH₃ → N₂ (Reaction 2)

NH₃ + O₂ → N₂ + NO + NO₂ (Reaction 3)

Our testing of commercial Cu/zeolite for SCR reaction with ammonia revealed that the reason of low NOₓ conversion over Cu/zeolite commercial catalyst at high temperatures is a too high rate of ammonia oxidation (Reaction 3). Ammonia is consumed by oxidation at high temperatures above 450°C, instead of desirable reaction of NOₓ reduction to nitrogen (Reaction 2), and there is a shortage of ammonia available for NOₓ reduction at high temperatures.

We propose that reaction of active Cu centers with extra-framework aluminum species, probably with formation of spinel-like species, creates new Cu-containing centers which are not active more in SCR reaction but are active in ammonia oxidation instead. Therefore, the removal of extra-lattice aluminum species and prevention of their new formation may improve the performance of Cu/zeolite catalyst in SCR reaction with ammonia at high temperatures due to the lowering of ammonia oxidation rate and preserving active copper species from deactivation. It also may improve the thermal stability of SCR Cu/zeolite catalyst.

The extra-lattice aluminum species from zeolite can be removed by the treatment with acidic or alkaline solution. However commercial Cu/zeolite catalyst is deposited as washcoat on cordierite. The treatment of commercial samples with acidic or basic solution destroys the links (chemical bonds) of washcoat with substrate and leads to removal of zeolite-containing washcoat from substrate. Typically, zeolite is connected with cordierite substrate via aluminum oxide binder, and this binder is soluble in strong acids or alkalis. In addition strong acids or alkalis can dissolve zeolite matrix. The other problem was that commercial samples already have copper including copper centers connected with extra-framework aluminum species, so it was necessary to remove not only extra-framework aluminum species, but also copper species from zeolite.

Therefore in this invention we developed a new method of preparation of very active and hydrothermally stable SCR catalyst, by obtaining modified zeolite, essentially free of extra-lattice (extra-framework) aluminum species. This method could be also used for improvement of commercial Cu/zeolite SCR catalyst on cordierite with citrate-containing solution using the combination of citric acid and diammonium citrate, having a pH value of 4-5. Such a solution can effectively remove both extra-framework aluminum species and copper ions from zeolite due to the excellent complexing properties of citrates facilitating the extraction of copper and extra-framework aluminum species from zeolite due to the formation of very soluble citrate complexes in solution. However, this weakly acidic solution is not able to dissolve aluminum binder in washcoat and zeolite lattice, therefore this specific treatment is very selective according to the following scheme:

Cu, Al-Zeolite + citric acid, diammonium hydrogen citrate→ Cu, Al ammonium citrate complexes in solution **(Reaction 4)**

Other oxycarboxylic acids, as malic and tartaric acids, and their ammonium salts also can be used to remove Cu and extra-framework aluminum, but they are less effective.

The citrate treated zeolite, having decreased amount of copper and extra-lattice aluminum species was further calcined at 600°C. The reason of these calcinations was to form extra-lattice aluminum species again due to dealumination process. These aluminum species come basically from amorphous impurities and defect areas of zeolite structure, where it is enriched by aluminum, especially those zones containing Al-O-Al species. The other reason of intermediate calcinations was to re-distribute the remaining copper species to facilitate their removal, because it is not possible to remove all copper ions by single citrate treatment.

Then the citrate treatment was repeated again to remove released extra-lattice aluminum and remaining copper. The resulting modified zeolite, which was now free from copper and extra-lattice aluminum species, was finally ion-exchanged with copper by standard ion-exchange procedure using the solution of copper nitrate (Reaction 5). The copper was re-inserted to zeolite, but zeolite was now modified due to the removal of extra-lattice aluminum. Typically, ion exchange can be described by replacing acid sites containing protons with other ions which are in excess in ion-exchange solution, for example Cu. Such Brönsted proton-containing acid sites are forming in zeolite as the result of substitution of tetravalent Si in zeolite framework with trivalent aluminum:

2H⁺-Zeolite + Cu⁺² (solution) → Cu⁺²-zeolite + 2H⁺ (solution) (lon-exchange, **Reaction 5**)

The results of SCR reaction with ammonia on this modified Cu-citrate treated zeolite (citrate treatment → calcinations 600°C→ second citrate treatment → the final ion-exchange with copper nitrate) are presented in Figure 2 together with SCR results of reference original commercial Cu/ zeolite for comparison purposes. As one can see, the performance of Cu/zeolite catalyst significantly improved at high temperatures, confirming our proposal. NOₓ conversion was 80% for modified citrate-treated Cu/zeolite vs. 70% for original reference Cu/zeolite at near 600°C, meantime the activity of such modified zeolite was the same at low temperatures.

For further improvement, we have to take into account that such citrate treatment can remove extra-lattice (extra-framework) aluminum species, but cannot prevent their new formation, though the amount of new formed extra-framework aluminum species will be definitely lower, because the major part of aluminum from defects, amorphous area and aluminum-enriched zeolite areas has been already removed.

In this case, the protection of zeolite structure from dealumination using additional ions is desirable, as it has been described in our early publication. It may help to further improve the performance of modified citrate-treated Cu/zeolite and may provide in addition the higher thermal stability against high-temperature deactivation. Such additional ions could occupy the same extra-lattice positions, preventing the appearance of aluminum ions on these positions and thus dealumination of zeolite.

However, the introduction of second ion is complicated taking into account that such ions will compete with Cu for protonic adsorption centers in zeolite, while non-Cu centers will be not active itself in SCR reaction, thus decreasing the activity at low temperatures.

H⁺-Zeolite + Cu⁺², Mg⁺² (solution) → Cu-zeolite + Mg-zeolite + nH⁺ (solution) **(Reaction 6)**

The competition between different ions for adsorption sites depends on their charge and ionic radius. Ions having high charge and lower radius, namely higher charge density, have a definitive advantage during ion-exchange. From this point of view, magnesium ion, having the same charge and slightly lower radius, will have some advantage before copper ion during ion-exchange, while calcium and strontium cannot compete with copper for adsorption sites due to the significantly bigger radius than copper has.

The amount of additional ions should be kept as low as necessary otherwise the activity of Cu/zeolite will suffer at low temperatures due to the decreased amount of active Cu sites. Such competition between ions will occur also during high temperature calcinations due to the enhanced mobility of ions at these temperatures and small and highly charged ions will have an advantage in this case too, forcing other ions to extra-lattice positions.

As can be seen in Figure 2, Example 2, the addition of magnesium ions during ion-exchange with copper nitrate had a big positive effect at low concentrations of magnesium nitrate. The sample 2a was prepared using Cu/Mg ratio of 15 in solution. This sample revealed the same activity as original commercial and Cu-only modified acid-treated zeolite (Example 1) at low temperatures, while NOₓ conversion was found to be increased up to 85% at near 600°C. This sample can effectively convert NOₓ with ammonia at all temperature conditions, which are typical for Diesel engine, and under high space velocities. This is the first example of catalyst which is effective under both low- and high- temperature conditions in comparison with current commercial Cu/zeolite and Fe/zeolite SCR catalysts and Ce-based catalysts, which were described in WO 2008085280.

For mixed Cu-Mg/zeolite catalysts, samples 2a-2c, the real Cu/Mg ratio in zeolite is lower, e.g. zeolites enriched with magnesium relative to Cu/Mg ratio in solution due to the preferential ion-exchange of magnesium ions in comparison with copper ions. The increase of magnesium ion concentration in solution during the ion-exchange procedure, and accordingly higher magnesium ion concentration in zeolites, leads to the lower performance under the low-temperature conditions as can be seen for Examples 2a-2c, Figure 2. However, it leads to better and excellent high-temperature performance up to near 100% of NOₓ conversion at 600°C. This decrease of low temperature activity is not desirable, but is relatively small for example 2b (Cu/Mg 7.5/1) with intermediate magnesium concentration in zeolite. As one can see in Fig.2, the performance of this sample is close at high temperatures to that for commercial Fe/zeolite, Reference 2, despite the catalyst does not contain any iron. The activity of the mentioned sample 2b is significantly higher at low temperatures than that of commercial Fe/zeolite. Such sample is very attractive for many Diesel applications with powerful Diesel engines, such as buses, and commercial vehicles, and diesel stationary engines, where exhaust gas temperatures are usually quickly rising from cold-start conditions up to 500 to 600°C and small decrease in low-temperature activity is not so crucial and can be completely compensated by some increase of catalyst volume, while its good high-temperature performance has a great value. In addition, the ammonia slip on this catalyst is lower than for commercial Fe/zeolite reference sample and N₂O formation properties of this sample are more appropriate than for reference Cu/zeolite, as shown in Fig. 3 and 4.

In general, the ammonia slip properties of the catalyst samples, presented in this invention, are quite close to that of Cu/zeolite reference sample, except for the samples with high magnesium loading (Cu/Mg 5/1, sample 2c), while N₂O selectivity is lower. So these catalysts can combine the best properties of Cu/zeolite and Fe/ zeolite reference catalysts.

The procedure to prepare mixed Cu-Mg/citrate treated zeolites according to examples 2, using ion-exchange method with solution containing copper nitrate and other metal nitrate (salt), is very flexible. It can be easily adjusted for applications where low or high temperature activity is more important.

However, this method is not so convenient for partial or complete substitution of magnesium ions with others, due to the ion competition during the ion-exchange, as it has been described above, especially for those ions, which cannot compete with copper and magnesium for ion-exchangeable protonic sites in zeolites.

Therefore, we developed another simple method to produce Cu-M modified zeolites, including for second step (after citrate treatment) the initial ion-exchange using only copper nitrate solution to re-insert copper with following calcinations at moderate temperature 400°C (without releasing extra-lattice aluminum species), and further apply the addition of desirable ions by impregnation in the presence of urea to obtain homogeneous metal ion distribution. This procedure is described in Examples 3. The results are presented in Figures 5 and 6. It was found that the use of small amounts of ions for protection of Cu/zeolite from dealumination, namely Mg (magnesium), Ca (calcium), Sr (strontium) and La (lanthanum) was very beneficial. These samples revealed a good performance, especially under high-temperature conditions, comparable with performance of Fe/zeolite commercial sample, and the performance, which was quite close to Cu/zeolite commercial sample at low temperatures. In addition, we found that some other ions, namely B (boron), Zr (zirconium), and Pr (praseodymium) can also improve the performance of modified Cu/citrate treated SCR zeolite. The best results of invention according Examples 3 is presented on Figure 6. The samples of invention had close or even better performance than commercial reference Cu/zeolite at low temperatures, and significantly better performance at high temperatures. The sample containing Zr was even more active than original Cu/zeolite commercial catalyst at low temperatures, while Pr-containing sample has shown excellent high-temperature NOx reduction, combined with the same performance as original commercial Cu/zeolite at low temperatures.

The addition of iron and cerium to modified Cu/citrate treated zeolite is very attractive due to the own activity of iron and cerium ions at high temperatures, while other ions are not active themselves. However copper cannot compete with iron and cerium for protonic ion-exchangeable centers, thus the activity was strongly suppressed at low temperatures relative to reference Cu/zeolite commercial SCR catalyst. Nevertheless, the introduction of small amount of iron or cerium ions together with magnesium had a beneficial effect, as presented on Fig.5. The addition of Ca, Pr, and Zr showed beneficial effect on activity of catalyst at high temperatures without decrease of its activity at low temperatures.

The samples prepared by methods of this invention also have an excellent stability and durability even under severe hydrothermal conditions, which are typical for applications with Diesel particulate filter (DPF). When SCR catalyst is deposited on the filter or installed downstream of the DPF, it will be exposed to extremely high temperatures during DPF regeneration from soot, up to 800-900°C. The comparison of commercial Cu/zeolite, Reference 1, and Cu-Pr, Example 3f and Cu-Zr, example 3g of the invention, after severe hydrothermal treatment at 900°C is presented on Figure 7. Both samples had practically kept their low-temperature performance, as can be seen from comparison of Fig.6 and Fig.7. For samples pictured in Fig.6, the hydrothermal treatment was carried out only at 600°C. The performance of commercial Cu/ zeolite drastically dropped however at high temperatures after 900°C hydrothermal aging, and decreased to less than 30% NOx conversion at 600°C, which is an indication that the catalyst was not protected versus dealumination and sintering of copper. Meantime, the catalysts of the invention had amazingly 80% NOx conversion at 600°C, and still had an excellent performance for NOx reduction for all temperature range. As can be seen, the catalysts of this invention can withstand high temperatures in contrast to commercial sample and are also suitable for applications with DPF (Diesel particulate filter). The performance of catalysts of present invention was better at all temperatures than the performance of commercial reference Cu/zeolite after severe hydrothermal aging, as one can see in Fig. 7.

Summarizing, the catalysts of the invention are the first example of SCR catalysts with ammonia as a reductant, showing high performance under whole temperature range operating conditions of Diesel engines in contrast to commercial Cu/zeolite and Fe/zeolite, also combining the best properties of such catalyst regarding ammonia slip and N₂O formation. The best catalysts of present invention have shown at least the same activity as Cu/zeolite commercial catalyst at low temperatures and the close performance to Fe/zeolite commercial catalyst at high temperatures. In addition, they presented an extremely high resistance to thermal deactivation, suitable for applications with Diesel particular filter, including the application of such modified catalysts on filter and upstream or downstream of DPF due to their ability to withstand extremely high temperatures during DPF regenerations.

The catalysts of present invention can be also used for SCR reactions with other reductants for NOx reduction, for example for SCR with hydrocarbons.

## Claims

1. Method for modifying a Cu/zeolite SCR catalyst for selective catalytic reduction of nitrogen oxides with ammonia, including commercial catalyst on cordierite or other substrate,
**characterized by** the following steps:
a) removal, in a starting material of honeycomb structure that is Cu-ZSM-5 zeolite washcoated on a monolithic substrate, of copper and of aluminum extra-lattice species from the zeolite and
b) re-insertion of copper or insertion of Cu-M ions, where M can be selected from the group consisting of Mg, Ca, Sr, La, Pr, B, Zr or Mg-Fe or Mg-Ce, by ion-exchange and/or impregnation of the washcoated zeolite from which copper and aluminum extra-lattice species have been removed,
where step a) is performed by double treatment with a citrate-containing solution, whereby the first treatment is followed by intermediate calcination at a temperature of at least 500°C and wherein the second treatment with the citrate-containing solution is carried out after said calcination.

2. Method according to claim 1,
**characterized in that**
the citrate-containing solution is a mixture of citric acid and diammonium hydrogen citrate.

3. Method according to claim 1 or 2,
**characterized in that**
the double treatment with the citrate-containing solution in step a) is performed at a temperature of 80-100°C, preferably of 88°C.

4. Method according to one of claims 1 to 3,
**characterized in that**
the citrate-containing solution for the double treatment in step a) has a pH value from 4 to 5.

5. Method according to one of claims 1 to 4,
**characterized in that**
the re-insertion of copper in step b) is performed by using ion-exchange with a solution of copper nitrate preferably of 0.1 M.

6. Method according to one of claims 1 to 4,
**characterized in that**
the insertion of Cu-M ions in step b) is performed with Mg as other metal ion by using ion-exchange using a solution of copper nitrate of 0.1 M and magnesium nitrate with Cu/ Mg molar ratio in solution from 30/1 to 5/1.

7. Method according to one of claims 1 to 4,
**characterized in that**
the re-insertion of copper or insertion of Cu-M ions in step b) is performed by ion-exchange using a solution of copper nitrate of 0.1 M, intermediate calcinations at a temperature of at least 350°C, preferably at 400°C, and the following impregnation with a solution of metal salts
- containing one or more cations from the following group: Mg, Ca, Sr, La, Pr, B, Zr; or
- containing a mixture of a magnesium salt and an iron (Fe) salt; or
- containing a mixture of a magnesium salt and a cerium (Ce) salt.

8. Method according to claim 7,
**characterized in that**
the impregnation with metal salt or metal salts is performed in the presence of urea.

9. Method according to claim 7 or 8,
**characterized in that**
the impregnated catalyst is dried for a period of at least 6 hours in a closed container at a temperature of 88°C with following calcinations at 600°C.

10. Modified Cu/ zeolite or Cu-M zeolite catalyst washcoated on a monolithic
substrate for SCR reduction of NOx in exhaust gas streams, **characterized in that**
the catalyst is obtainable by the methods of one of claims 1 to 9.

11. Catalytic aftertreatment system,
**characterized in that**
the catalytic aftertreatment system contains a Diesel particulate filter (DPF) and a SCR catalyst with the modified Cu/zeolite or Cu-M zeolite washcoated on a monolithic substrate of claim 10 installed upstream and/or downstream of DPF.

12. Catalytic aftertreatment system according to claim 11,
**characterized in that**
the system is designed to add ammonia to the exhaust gases, whereby the temperature of the exhaust gases is varied from 100 to 700°C, preferably from 170 to 600°C.

13. Catalysts aftertreatment system
**characterized in that**
a catalyst according to claim 10 is combined with upstream or downstream Cu/zeolite and/or Fe/zeolite catalytic systems.

## Patentansprüche

1. Verfahren zum Modifizieren eines Cu/Zeolith-SCR-Katalysators für die selektive katalytische Reduktion von Stickstoffoxiden mit Ammoniak, umfassend gewerblichen Katalysator auf Cordierit oder einem anderen Substrat,
**gekennzeichnet durch** folgende Schritte:
a) aus einem Ausgangsmaterial mit Bienenwabenstruktur, bei dem es sich um Cu-ZSM-5-Zeolith aufgeschichtet auf ein monolithisches Substrat handelt, Entfernen von Kupfer und von Aluminium-Zwischengitterspezies aus dem Zeolith und
b) Wiedereinführen von Kupfer oder Einführen von Cu-M-Ionen, wobei M ausgewählt sein kann aus der Gruppe bestehend aus Mg, Ca, Sr, La, Pr, B, Zr oder Mg-Fe oder Mg-Ce, **durch** Ionenaustausch und/oder Imprägnieren des aufgeschichteten Zeoliths, aus dem Kupfer und Aluminium-Zwischengitterspezies entfernt worden sind,
wobei Schritt a) **durch** Zweifachbehandlung mit einer citrathaltigen Lösung durchgeführt wird, wobei die erste Behandlung von Zwischenkalzinieren bei einer Temperatur von wenigstens 500 °C gefolgt wird und wobei die zweite Behandlung mit der citrathaltigen Lösung nach der Kalzinierung durchgeführt wird.

2. Verfahren gemäß Anspruch 1,
**dadurch gekennzeichnet, dass**
die citrathaltige Lösung ein Gemisch von Citronensäure und Diammoniumhydrogencitrat ist.

3. Verfahren gemäß Anspruch 1 oder 2,
**dadurch gekennzeichnet, dass**
die Zweifachbehandlung mit der citrathaltigen Lösung bei Schritt a) bei einer Temperatur von 80-100 °C, vorzugsweise von 88 °C, durchgeführt wird.

4. Verfahren gemäß einem der Ansprüche 1 bis 3,
**dadurch gekennzeichnet, dass**
die citrathaltige Lösung für die Zweifachbehandlung bei Schritt a) einen pH-Wert von 4 bis 5 aufweist.

5. Verfahren gemäß einem der Ansprüche 1 bis 4,
**dadurch gekennzeichnet, dass**
das Wiedereinführen von Kupfer bei Schritt b) unter Verwendung von Ionenaustausch mit einer Lösung von Kupfernitrat, vorzugsweise mit 0,1 M, durchgeführt wird.

6. Verfahren gemäß einem der Ansprüche 1 bis 4,
**dadurch gekennzeichnet, dass**
das Einführen von Cu-M-Ionen bei Schritt b) mit Mg als anderes Metallion unter Verwendung von Ionenaustausch unter Verwendung einer Lösung von Kupfernitrat mit 0,1 M und Magnesiumnitrat mit einem Cu/Mg-Molverhältnis in Lösung von 30/1 bis 5/1 durchgeführt wird.

7. Verfahren gemäß einem der Ansprüche 1 bis 4,
**dadurch gekennzeichnet, dass**
das Wiedereinführen von Kupfer oder das Einführen von Cu-M-Ionen bei Schritt b) durch Ionenaustausch unter Verwendung einer Lösung von Kupfernitrat mit 0,1 M, Zwischenkalzinierungen bei einer Temperatur von wenigstens 350 °C, vorzugsweise bei 400 °C, und nachfolgender Imprägnierung mit einer Lösung von Metallsalzen, die
- ein oder mehrere Kationen aus der folgenden Gruppe enthalten: Mg, Ca, Sr, La, Pr, B, Zr; oder
- ein Gemisch aus einem Magnesiumsalz und einem Eisen(Fe)-Salz enthalten; oder
- ein Gemisch aus einem Magnesiumsalz und einem Cer(Ce)-Salz enthalten,
durchgeführt wird.

8. Verfahren gemäß Anspruch 7,
**dadurch gekennzeichnet, dass**
das Imprägnieren mit Metallsalz oder Metallsalzen in Gegenwart von Harnstoff durchgeführt wird.

9. Verfahren gemäß Anspruch 7 oder 8,
**dadurch gekennzeichnet, dass**
der imprägnierte Katalysator über einen Zeitraum von wenigstens 6 Stunden in einem geschlossenen Behälter bei einer Temperatur von 88 °C getrocknet wird, mit nachfolgenden Kalzinierungen bei 600 °C.

10. Modifizierter Cu/Zeolith- oder Cu-M-ZeolithKatalysator, aufgeschichtet auf ein monolithisches Substrat, für die SCR-Reduktion von NOx in Abgasströmen,
**dadurch gekennzeichnet, dass**
der Katalysator durch die Verfahren gemäß einem der Ansprüche 1 bis 9 erhältlich ist.

11. Katalytisches Nachbehandlungssystem,
**dadurch gekennzeichnet, dass**
das katalytische Nachbehandlungssystem einen Diesel-Partikelfilter (DPF) und einen SCR-Katalysator mit dem modifizierten Cu/Zeolith oder Cu-M-Zeolith, aufgeschichtet auf ein monolithisches Substrat, gemäß Anspruch 10 stromaufwärts und/oder stromabwärts bezogen auf den DPF angeordnet umfasst.

12. Katalytisches Nachbehandlungssystem gemäß Anspruch 11,
**dadurch gekennzeichnet, dass**
das System dafür ausgelegt ist, den Abgasen Ammoniak zuzugeben, wobei die Temperatur der Abgase von 100 bis 700 °C variiert, vorzugsweise von 170 bis 600 °C.

13. Katalytisches Nachbehandlungssystem,
**dadurch gekennzeichnet, dass**
ein Katalysator gemäß Anspruch 10 mit stromaufwärtigen oder stromabwärtigen katalytischen Cu/Zeolith- und/oder Fe/Zeolith-Systemen kombiniert ist.

## Revendications

1. Procédé pour la modification d'un catalyseur de RCS Cu/zéolite pour la réduction catalytique sélective d'oxydes d'azote avec de l'ammoniac, comprenant un catalyseur du commerce sur de la cordiérite ou un autre substrat,
**caractérisé par** les étapes suivantes :
a) l'élimination, dans un matériau de départ à structure en nid-d'abeilles qui est de la zéolite ZSM-5 au Cu déposée par imprégnation sur un substrat monolithique, des espèces du cuivre et de l'aluminium situées en dehors du réseau hors de la zéolite et
b) la réinsertion de cuivre ou l'insertion d'ions Cu-M, M pouvant être choisi dans le groupe constitué par Mg, Ca, Sr, La, Pr, B, Zr ou Mg-Fe ou Mg-Ce, par échange d'ions et/ou imprégnation de la zéolite déposée par imprégnation dont les espèces du cuivre et de l'aluminium situées en dehors du réseau ont été enlevées,
où l'étape a) est effectuée par double traitement avec une solution contenant du citrate, le premier traitement étant suivi d'une calcination intermédiaire à une température d'au moins 500 °C et dans lequel le second traitement avec la solution contenant du citrate est effectué après ladite calcination.

2. Procédé selon la revendication 1,
**caractérisé en ce que**
la solution contenant du citrate est un mélange d'acide citrique et d'hydrogénocitrate de diammonium.

3. Procédé selon la revendication 1 ou 2,
**caractérisé en ce que**
le double traitement avec la solution contenant du citrate dans l'étape a) est effectué à une température de 80 à 100 °C, de préférence de 88 °C.

4. Procédé selon l'une des revendications 1 à 3,
**caractérisé en ce que**
la solution contenant du citrate pour le double traitement dans l'étape a) a une valeur de pH de 4 à 5.

5. Procédé selon l'une des revendications 1 à 4,
**caractérisé en ce que**
la réinsertion de cuivre dans l'étape b) est effectuée à l'aide d'un échange d'ions avec une solution de nitrate de cuivre de préférence 0,1 M.

6. Procédé selon l'une des revendications 1 à 4,
**caractérisé en ce que**
l'insertion d'ions Cu-M dans l'étape b) est effectuée avec du Mg en tant qu'autre ion métallique à l'aide d'un échange d'ions utilisant une solution de nitrate de cuivre 0,1 M et de nitrate de magnésium avec un rapport molaire Cu/Mg en solution de 30/1 à 5/1.

7. Procédé selon l'une des revendications 1 à 4,
**caractérisé en ce que**
la réinsertion de cuivre ou l'insertion d'ions Cu-M dans l'étape b) est effectuée par un échange d'ions utilisant une solution de nitrate de cuivre 0,1 M, des calcinations intermédiaires à une température d'au moins 350 °C, de préférence à 400 °C, et l'imprégnation subséquente avec une solution de sels métalliques
- contenant un ou plusieurs cations provenant du groupe suivant : Mg, Ca, Sr, La, Pr, B, Zr ; ou
- contenant un mélange d'un sel de magnésium et d'un sel de fer (Fe) ; ou
- contenant un mélange d'un sel de magnésium et d'un sel de cérium (Ce).

8. Procédé selon la revendication 7,
**caractérisé en ce que**
l'imprégnation avec du sel métallique ou des sels métalliques est effectuée en présence d'urée.

9. Procédé selon la revendication 7 ou 8,
**caractérisé en ce que**
le catalyseur imprégné est séché pendant une durée d'au moins 6 heures dans un récipient fermé à une température de 88 °C avec des calcinations subséquentes à 600 °C.

10. Catalyseur Cu/zéolite ou zéolite au Cu-M modifié déposé par imprégnation sur un substrat monolithique pour la réduction RCS de NOx dans des flux de gaz d'échappement,
**caractérisé en ce que**
le catalyseur peut être obtenu par les procédés selon l'une des revendications 1 à 9.

11. Système de post-traitement catalytique,
**caractérisé en ce que**
le système de post-traitement catalytique contient un filtre à particules (FAP) diesel et un catalyseur de RCS comprenant la zéolite au Cu ou zéolite au Cu-M modifiée déposée par imprégnation sur un substrat monolithique selon la revendication 10 installé en amont et/ou en aval du FAP.

12. Système de post-traitement catalytique selon la revendication 11,
**caractérisé en ce que**
le système est conçu pour ajouter de l'ammoniac aux gaz d'échappement, la température des gaz d'échappement étant amenée à varier de 100 à 700 °C, de préférence de 170 à 600 °C.

13. Système de post-traitement avec des catalyseurs
**caractérisé en ce que**
un catalyseur selon la revendication 10 est combiné avec des systèmes catalytiques Cu/zéolite et/ou Fe/zéolite en amont ou en aval.
